(19)

Europäisches
Patentamt
European
Patent Office
Office européen
des brevets

(11) **EP 4 557 231 A1**

(12) **EUROPEAN PATENT APPLICATION**

(43) Date of publication:
**21.05.2025 Bulletin 2025/21**

(21) Application number: **23210635.1**

(22) Date of filing: **17.11.2023**

(51) International Patent Classification (IPC):
**G06V 10/25** (2022.01)    **G06V 10/44** (2022.01)
**G06V 10/74** (2022.01)    **G06V 10/764** (2022.01)
**G06V 10/82** (2022.01)    **G06V 20/52** (2022.01)

(52) Cooperative Patent Classification (CPC):
**G06V 10/82; G06V 10/25; G06V 10/454;
G06V 10/761; G06V 10/764; G06V 20/52**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beckman Coulter, Inc.
Brea, CA 92821 (US)**

(72) Inventors:
• **ALBERTI, Chiara**
  **Brea, 92821 (US)**
• **KALUZHENKO, Serhii**
  **Brea, 92821 (US)**
• **REICHLE, Roland**
  **Brea, 92821 (US)**
• **VARLET, Leopold**
  **Brea, 92821 (US)**

(74) Representative: **Maiwald GmbH
Elisenhof
Elisenstraße 3
80335 München (DE)**

Remarks:
Amended claims in accordance with Rule 137(2)
EPC.

(54) **LABORATORY CONTAINER PROCESSING**

(57)    Aspects relate to a computer implemented method, a computer program, a computer readable medium, a data processing system and a laboratory instrument. The computer-implemented method comprises obtaining a first image depicting at least a portion of a container and determining, using a first machine learning model, the first image and a first rejection algorithm, whether the container depicted in the first image belongs to one container category of a plurality of container categories or the container depicted in the first image does not belong to any container category of the plurality of container categories. The first rejection algorithm uses an output of a hidden layer of the first machine learning model. The first machine learning model is trained to classify containers in the plurality of container categories using training images of containers. Each of the training images of the containers corresponds to exactly one container category of the plurality of container categories.

FIG 1

EP 4 557 231 A1

**Description**

The technical field is laboratory operations. More specifically, aspects relate to processing containers in a laboratory.

When carrying out a clinical test on a biological sample via a laboratory instrument, it may be desirable to automate processing of the biological sample within laboratory as far as possible.

Conventionally, it may be necessary to capture images of an entire container from a plurality of angles in order to classify the container, e.g. a tube of biological samples, in a container category. In particular, these images may be captured while rotating the container. Moreover, it may be necessary to determine multiple characteristics of the container, such as a container height, length, width, diameter, a closure shape (e.g., one closure may become gradually narrower from the bottom towards the top whereas another closure may have a similar width from bottom to top), depressions or protrusions on the surface of the closure (e.g., one closure may have protrusions/depressions on only one side whereas another closure may have protrusions/depressions on both sides or on the top) and a closure color in order to classify the container in a container category. Characteristics of some closures may be more easily determined depending on a viewing perspective. For example, some characteristics of a closure may be more easily determined from a side view of the closure whereas other characteristics of the closure may be more easily determined from a top view of the closure.

In particular the closure is a cap applied on the container. Determining whether the container can be classified into a container category may include referring to a set of verification examples, where each verification example in the set of verification examples is a typical representative of a corresponding container category. Each one of the verification examples may correspond to an image of a container representing the corresponding container category. If any of the determined characteristics do not match corresponding characteristics of one of the verification examples, it may be determined that the container cannot be classified. Hence, conventional approaches may lack flexibility when determining whether a container can be classified. In some cases, it may be necessary to process a label and/or machine-readable code of the container in order to classify the container.

Accordingly, it may be desirable to distinguish between containers that can be classified and containers that cannot be classified, particularly by doing so in a way that is more flexible and/or accurate than conventional approaches. Moreover, it may be desirable to efficiently and accurately classify a container in a container category. In addition, it may be desirable to perform these tasks using as few images as possible, e.g., using a first image, where the first image includes limited information about the container, e.g., the first image does not depict the container from multiple angles or does not depict the entire container. It may also be desirable to classify the container without reference to a label or machine-readable code of the container.

According to a first aspect, a computer implemented method is provided. The method comprises obtaining a first image depicting at least a portion of the container. The method further comprises determining, using a first machine learning model, the first image and a first rejection algorithm, whether the container depicted in the first image belongs to one container category of a plurality of container categories or the container in the first image does not belong to any container category of the plurality of container categories. The first rejection algorithm uses an output of a hidden layer of the first machine learning model. The first machine learning model is trained to classify containers in the plurality of container categories using training images of the containers. Each of the training images of the containers corresponds to exactly one container category of the plurality of container categories.

The method may be for distinguishing between containers that can be classified and containers that cannot be classified. The method may enable a container category of the container depicted in the first image to be determined.

The container may be for a biological sample. Accordingly, the container may be a receptacle capable of holding the biological sample, e.g., a test tube. The biological sample may be a material or specimen and may include blood, urine, tissue, cells, saliva, and the like. In addition or alternatively, the biological sample may include a bodily fluid from a patient.

An input of the first rejection algorithm may be based on or consist of the output of the hidden layer of the first machine learning model.

The first rejection algorithm may comprise a set of conditions. If at least one of said conditions is fulfilled, the method may comprise establishing that the container does not belong to any container category of the plurality of container categories.

The plurality of container categories may correspond to biological samples contained within the respective containers. For example, the container categories may include serum, hematological, plasma, urine. In addition, further container categories may be defined based on substances added to the biological samples. For example, a container containing serum may be categorized depending on which clot activator is included with the serum. In addition or alternatively, plasma may be categorized based on one or more anticoagulants added to the plasma. In addition or alternatively, the plurality of container categories may correspond to characteristics of the container and/or the closure. For example, closure sizes or colors may correspond to different categories, possibly in combination with different container shapes or sizes. The characteristics of the container and/or the closure may also correspond to the biological samples contained within the respective container. For example, a brown closure extending beyond the edges of the container combined with a container volume of 15 ml may correspond to serum with a particular clot activator.

In particular, each container category of the plurality of container categories is indicative of respective information on the containers belonging to that container category. Said information may for instance specify one or more of shape, geometrical dimensions, weight, material, allowed fill level of the containers belonging to that container category, and/or information on how the containers belonging to that container category should be handled (e.g. de-capped, held by a gripper, re-capped, and the like), and/or information on how to calculate the weight and the volume of the containers belonging to that container category and/or information specifying the analyzers that can process (i.e., are capable of processing) the containers belonging to that container category. For example, a urinalysis analyzer may be capable of processing containers containing urine but not capable of processing containers containing blood or plasma.

For instance, for each container category of the plurality of container categories the respective information is indicative of how the containers belonging to that container category shall be handled e.g. by analyzers or an ALS, and/or which analyzers can process those containers.

In particular, for each container category of the plurality of container categories, the respective information may be stored in a database which e.g., may be included in the memory of the computing device implementing the method of the present disclosure or in a different memory.

Exemplarily, if it is determined that the container depicted in the first image belongs to one container category of the plurality of container categories, the method further comprises obtaining the respective information indicated by that one category (e.g., by accessing the database) and causing the container to be processed according to said respective information. For example, causing the container to be processed according to said respective information comprises instructing one or more analyzers and/or an ALS to process the container according to said respective information. For instance, the causing the container to be processed according to said respective information comprises processing, by one or more analyzers and/or an ALS, the container according to said respective information.

The first machine learning model may be implemented using a computer program that determines a mapping between an image depicting at least a portion of a container (e.g., the first image) and one of the plurality of container categories.

The first machine learning model may include a neural network. The hidden layer (herein also referred to as: "first hidden layer") of the first machine learning model may be part of the neural network. In particular, the hidden layer of the first machine learning model may be an intermediate or internal layer of the neural network. The output of the hidden layer may be obtained by processing the first image. In particular, the neural network may comprise an input layer for receiving the input of the neural network, an output layer for generating the output of the neural network and one or more hidden layers arranged between the input layer and the output layer. Exemplarily, the neural network may comprise a first set of hidden layers that are arranged between the input layer and the first hidden layer and a second set of hidden layers that are arranged between the first hidden layer and the output layer. In particular, the first hidden layer generates its output by processing as input the output of the hidden layer of the first set of hidden layers that immediately precedes the first hidden layer.

The neural network of the first machine learning model may be trained to classify containers in the plurality of container categories using the training images of containers.

The first machine learning model may be based on a machine learning model pre-trained to classify images. More specifically, the first machine learning model may be based on a pre-trained neural network. For example, the pre-trained neural network may be implemented based on the approach disclosed in "EfficientNetV2: Smaller Models and Faster Training", Tan et al., 2021. The first machine learning model may be based on one or more of the following neural networks: EfficientNetV2, YoloV8n-cls, ResNet50, MobileV3 Small and Large.

Obtaining the first image may comprise capturing the first image using an image capture device or receiving a previously-captured image e.g. by an image capture device. In particular, the image capture device may be a photo and/or a video camera.

The training images of containers may comprise images obtained using the image capture device or another image capture device having corresponding capabilities and/or characteristics. The training images of containers may comprise images obtained via data augmentation (e.g., data augmentation may be applied to the images captured using the image capture device or the other image capture device). For example, the data augmentation may comprise adding noise, shifting the color of the images by increasing the value on one or more channels of the image, changing the contrast and/or brightness or other image modifications.

Each of the training images of containers corresponds to (e.g., is associated with) exactly one category of the plurality of container categories. Hence, for each training image, the respective training image may be categorized in only one category of the plurality of container categories.

The image capture device may be part of a laboratory instrument (e.g., a laboratory analyzer). The laboratory instrument may be used in a clinical laboratory to perform laboratory tests on biological samples. The laboratory instrument may be designed to measure clinical parameters, e.g., chemical substances, cellular components, or biomarkers. The laboratory instrument may be designed to assist in one or more of the diagnosis, monitoring and treatment of medical conditions. The laboratory instrument may be comprised in an automated laboratory system (ALS). The laboratory instrument may be capable of communicating with other laboratory instruments and/or communicating with other devices (e.g., computers). The laboratory instrument may be referred to as a laboratory device or laboratory equipment and may include laboratory automation. The laboratory instrument may be a medical or clinical analyzer. The laboratory instrument may also include one or more pre-analysis, analysis and post analysis components.

A laboratory analyzer is, in particular, a laboratory instrument configured to carry out one or more analytic steps, such as measuring one or more characteristics of a biological sample, e.g., the concentration of an analyte. The laboratory analyzer may include an immunoassay analyzer, a chemistry analyzer, and identification and antibiotic susceptibility analyzer, a bacteriology analyzer, a molecular analyzer, a hematology analyzer or a urinalysis instrument.

An automation component may be for moving containers from one laboratory instrument to another laboratory instrument or for moving containers from one component of a laboratory instrument to another component of the same laboratory instrument or to another component of another laboratory instrument. The automation component may include a track, a belt and/or a container carrier configured to move biological samples.

Generally, an ALS is an assembly comprising a plurality of components and a computing device, wherein the computing device is operatively connected to the plurality of components and is configured to control each component. A component may be a laboratory analyzer, a pre-analysis laboratory instrument, a post analysis laboratory instrument, and input/output module, an automation component (e.g., track, belt, container carrier) configured to move a biological sample within the laboratory. In particular, the ALS may comprise one or more subsystems, wherein a subsystem comprises one or more components of the ALS.

A pre-analysis laboratory instrument is configured to carry out one or more analytic steps on a biological sample to prepare the biological sample for the analytic instrument(s). A pre-analysis laboratory instrument may include a centrifuge, a decapper, recapper (e.g., for putting caps back on containers) and/or aliquoter.

A post-analysis laboratory instrument is configured to carry out one or more post-analytic steps on the biological sample after the biological sample has been processed by one or more laboratory analyzers. A post-analysis laboratory instrument may include one or more of a recapper, a storage device, a refrigerator, and an input/output device. Both pre-analysis and post-analysis laboratory instruments may be referred to as peri-analytical laboratory instruments.

The image capture device may be included in a component of an ALS. For example, the image capture device may be comprised in a Tube Identification Unit (TIU) of the ALS. In particular, a TIU is a component of the ALS comprising the image capture device, the image capture device being arranged (and/or arrangeable) at a predetermined location within the TIU. The TIU is configured to receive a tube in an identification position with respect to the predetermined position and the image capture device is configured to capture at least an image of at least a portion of the tube, e.g. the first image, when the tube is at the identification position and the image capture device is at the predetermined location. In particular, the image capture device may be arranged (and/or arrangeable) at another predetermined location within the TIU. Moreover, the image capture device is configured to capture a further image of at least a portion of the tube e.g., when the image capture device is at the other predetermined position and the tube is either at the aforementioned identification position and/or at a further identification position.

Determining whether the container depicted in the first image belongs to one container category of a plurality of container categories or the container depicted in the first image does not belong to any container category of the plurality of container categories using the first machine learning model, the first image and the at least one rejection algorithm may have the advantage that the first image is typically sufficient to enable the determination to be carried out. More specifically, it is typically unnecessary to obtain further images, obtain images of the entire container, rotate the container or use the label and/or the machine-readable code of the container.

The rejection algorithm may enable classification and rejection with relatively high accuracy, particularly because it is not necessary to train the first machine learning model to recognize containers to be rejected. Put another way, the rejection algorithm can be used to overcome a difficulty in training the first machine learning model to classify containers in a category for rejection.

The approach described above may be more flexible than conventional approaches, particularly because it is not necessary to match the container to a corresponding verification example.

Obtaining the first image may comprise producing the first image using a camera or receiving the first image from the camera. Hence, the image capture device may be implemented by means of or using the camera.

The first machine learning model may comprise a convolutional neural network. Hence, the neural network may comprise or consist of the convolutional neural network. The hidden layer may be part of the convolutional neural network. The output of the hidden layer may be associated with coordinates of a point in a feature space, the coordinates of the point in the feature space representing the first image. Accordingly, the point in the feature space may represent the first image.

The convolutional neural network may comprise on one or more of the following neural networks: EfficientNetV2, YoloV8n-cls, ResNet50, MobileV3 Small and Large. Moreover, the convolutional neural network may further comprise one or more additional hidden layers. For example, in addition to one or more of the aforementioned neural networks, the convolutional neural network may comprise a further convolutional layer and a batch normalization layer, wherein the batch normalization layer may normalize the output of the convolutional layer and apply a linear transform to arrive at an output. A purpose of the further convolutional layer may be to reduce the number of dimensions in the output of the pre-trained neural network and/or to improve performance. In particular, the convolutional neural network may comprise a neural network, e.g., the EfficientNetV2 neural network, which is pre-trained.

The further convolutional layer may have a plurality of filters. For example, the number of filters in the plurality of filters may depend on the number of container categories in the plurality of container categories. More specifically, the number of filters in the plurality of filters may be about double or at least double the number of categories in the plurality of container categories. In a specific case, if the number of container categories in the plurality of container categories is about 12 then the number of filters in the plurality of filters could be about 26 or at least 26. Similarly, if the number of container categories in the plurality of container categories is about 20 then the number of filters in the plurality of filters may be about 38 or at least 38. In some cases, performance may be improved by using at least 26 filters.

The convolutional neural network may also comprise an activation function (e.g., to specify whether neurons should be activated) after the batch normalization layer. For example, the convolutional neural network may comprise swish activation after the batch normalization layer. In some cases, the input to the hidden layer used by the first rejection algorithm may be provided by the activation function.

The pre-trained neural network may be further trained with the additional hidden layers to classify the containers in the plurality of container categories. For example, training may be carried out in stages. In a first stage, weights of the pre-trained neural network may be frozen to train one or more of the additional hidden layers, then the pre-trained neural network may be unfrozen gradually, blocks of layers at a time, possibly starting from layers closets to the output layer and ending with layers closest to the input layer.

The output of the hidden layer of the first machine learning model may comprise a plurality of numerical values that may be interpreted as coordinates of a point in the feature space. More specifically, the output of the hidden layer may be normalized using a normalization algorithm (e.g., to scale the output of the hidden layer to a unit norm) and the output of the normalization algorithm may be interpreted as coordinates of the point in the feature space containing features (e.g., numbers). The feature space may be a multidimensional space. For instance, the feature space may be an Euclidean space, e.g., $R^p$, wherein p is an integer number greater than one and equal to the number of the plurality of numerical values comprised in the output of the hidden layer. For example, if the output of the hidden layer is the coordinate expressed in the standard basis of the point of the feature space $R^p$. The feature space may be a hypersphere of a Euclidean space, e.g., the unit hypersphere centered at the origin on $R^p$.

In particular, the output of the hidden layer may be associated with the coordinates of the point in the feature space in the sense that the output of the hidden layer is the coordinates of the point in the feature space. In particular, the coordinates of the point in the feature space, i.e., the output of the hidden layer, represent the first image in the sense that the coordinates are output generated by the hidden layer of the machine learning model, e.g., of the (convolutional) neural network, when the machine learning model processes the first image.

The determining of whether the container depicted in the first image belongs to one container category of the plurality of container categories or the container depicted in the first image does not belong to any container category of the plurality of container categories comprises obtaining, for each container category of the plurality of container categories, a respective category point to represent said container category.

The respective category point representing said container category may be one of a plurality of points representing the container category. In particular, the determining of whether the container depicted in the first image belongs to one container category of the plurality of container categories or the container depicted in the first image does not belong to any container category of the plurality of container categories comprises obtaining, for each container category of the plurality of container categories, a respective plurality of category points representing said container category.

The training images may be normalized e.g., so that the pixel values of each training image are between 0 and 1.

The first rejection algorithm may be based on one or more of the category points representing the plurality of container categories. More specifically, the first rejection algorithm may include determining how the category points relate, e.g., are arranged with respect, to the point representing the first image in the feature space, determining how distant are the category points from the point representing the first image in the feature space, and/or comparing distances between the category points and the point representing the first image. The distance comparisons may enable a determination to be made regarding whether the point representing the first image is sufficiently close to one category point and sufficiently far away from other category points for a container category to be established.

The first rejection algorithm may be based on at least a first distance, $d_1$, and a second distance, $d_2$. The first distance may be a distance between the point in the feature space, P, representing the first image and a first category point, $C_1$, the first category point representing a container category that is closest to the point in the feature space representing the first image. The second distance may be a distance between the point in the feature space representing the first image and a second category point, $C_2$, representing a container category that is second closest to the point in the feature space representing the first image.

In particular, the first category point is the category point of the plurality of category points with the smallest distance from the point in the feature space. The second category point is, in particular, the category point of the plurality of category points with the second smallest distance from the point in the feature space. The first distance and/or the second distance may be a Euclidean distance. For instance, if the point in the feature space is given by $P = (x_1, ..., x_p)^T$, the first category point is given by $C_1 = (x_{C1,1}, ..., x_{C1,p})^T$ and the second category point is given by $C_2 = (x_{C2,1}, ..., x_{C2,p})^T$ the first and the second distance may read as follows:

$$d_1 = \sqrt{\sum_{i=1}^{p} (x_{C1,i} - x_i)^2};\qquad (1a)$$

$$d_2 = \sqrt{\sum_{i=1}^{p} (x_{C2,i} - x_i)^2}.\qquad (1b)$$

In particular, the superscript "T" of the p-tuples for the points in the feature space denotes transposition.

The determining of whether the container depicted in the first image belongs to one container category of the plurality of container categories or the container depicted in the first image does not belong to any container category of the plurality of container categories may comprise obtaining the first distance and obtaining the second distance. If at least one condition of a set of conditions of the first rejection algorithm is fulfilled, the method may further comprise establishing that the container does not belong to any container category of the plurality of container categories. If none of the conditions of the set of conditions of the first rejection algorithm is fulfilled, the method may further comprise establishing that a container category of the container depicted in the first image is the container category represented by the respective category point closest to the coordinates of the point representing the first image.

Exemplarily, obtaining the first distance and obtaining the second distance may comprise computing the first and the second distance, e.g., by using equations (1a) and (1b). For example, obtaining the first distance and obtaining the second distance may comprise obtaining e.g., computing, for each category, q, of the plurality of categories, a respective distance, $d_q$ between the respective category point, $C_q = (x_{Cq,1}, ..., x_{Cq,p})^T$ and the point, $P = (x_1, ..., x_p)^T$, in the feature space, e.g.,

$$d_q = \sqrt{\sum_{i=1}^{p} (x_{Cq,i} - x_i)^2}.$$

The set of conditions of the first rejection algorithm may comprise one or more of the following conditions:

$d_1 > T_1$    - the first distance ($d_1$) is greater than a first threshold ($T_1$)

$D = d_2 - d_1 < T_2$    - a distance difference (D) between the second distance and the first distance is less than a second threshold ($T_2$)

$R = D/d_1 < T_3$    - a quotient (R) of the distance difference (D) divided by the first distance ($d_1$) is less than a third threshold ($T_3$)

Prior to establishing that the container does not belong to any container category of the plurality of container categories if at least one condition of the set of conditions of the first rejection algorithm is fulfilled, the method may further comprise establishing whether at least one condition of the set of conditions is fulfilled.

In some cases, it may be sufficient if the set of conditions includes the condition that the first distance is greater than the first threshold and the distance difference between the second distance and the first distance is greater than the second threshold. In particular, the condition that the quotient of the distance difference divided by the first distance is less than the third threshold may be omitted.

The first threshold may have a value between about 3 and about 5, or the first threshold may have a value of about 4. The second and third thresholds may each have a value of about 1 or about 2.

The training images may include multiple sets of training images, e.g., initial training images (e.g., about 70% of the training images), validation images (e.g., about 10% of the training images) and testing images (e.g., about 20% of the training images). The initial training images, the validation images and/or the testing images may be obtained via the image capture device comprised in the TIU.

More specifically, there may be from about 700 to about 5000 training images, e.g., about 720 to about 4400 training images. The training images may be evenly distributed to the plurality of container categories.

The training may be carried out for a specified number of epochs, where each epoch includes passing training images (e.g., one of the sets of training images) through the machine learning model (e.g., the first machine learning model). Exemplarily, the training may be carried out by using 15 epochs and batches with a batch size equal to 16. The loss function used during training may be categorical cross entropy. The learning rate (i.e., step size) may be set to 0.001. Alternatively, the training may be carried out by using an exponentially decreasing learning rate, LR, which decreases after each training step (e.g. after each performance of gradient descent, e.g. after processing each a batch), e.g. according to the following formula:

$$LR = LR0 * A^{[step/DS]}$$

Wherein, for instance LR0=0.001, decay rate (A) = 0.9 and decay steps (DS) = 67.

A training step is one gradient update in which a number of images corresponding to the batch size are processed; an epoch may include many training steps. Each training step may involve processing a number of images corresponding to the batch size (e.g., if the batch size is 16, then each training step may comprise processing 16 images). For example, if the set of training images has a cardinality of 4,000 and the training is carried out by using batches with a batch size of 16, the number of training steps in each epoch is equal to 4,000/16=250.

The first threshold, the second threshold and the third threshold may be selected by means of the images of a first set of images and, optionally, of the images of a second set of images. In particular, the first set of images comprises the testing images depicting containers that the trained machine learning model has wrongly classified. The second set of images comprises images depicting containers that do not belong to any categories of the plurality of categories.

Exemplarily, the first threshold ($T_1$) may be defined as follows. Each image, $I_j$ (j=1,..., K), of the first set of images is processed by using the trained machine learning model thereby obtaining a respective point, $P_j = (x_{j,1}, ..., x_{j,p})^T$, of the feature space. For each image $I_j$ (j=1,..., K) the respective point $P_j$ is used to compute a plurality of distances, $d_{j,1}, ... d_{j,Q}$, wherein Q is the number of categories of the plurality of categories and $d_{j,s}$ is the distance between the $P_j$ and the category point, $C_s=(x_{Ck,1}, ..., x_{Ck,p})^T$ associated with the $s^{th}$ category, e.g.

$$d_{j,s} = \sqrt{\sum_{i=1}^{p} (x_{CS,i} - x_{j,i})^2}.$$

In some embodiments, the first threshold is given by the smallest of the distances $\{d_{j,s}\}_{j=1,..., K; s=1,..., Q}$, i.e.,:

$$T_1 = \min_{j=1,..., K; s=1,..., Q}( d_{j,s} ).$$

According to the present invention, a notation of the type $\{g_{\gamma,\theta}\}_{\gamma=1,..., \Gamma; \theta=1,..., \Theta}$ denotes the set, G, of $\Gamma \times \Theta$ elements $G = \{g_{1,1}, ...., g_{1\Theta}, ..... , g_{\Gamma,1}, ...., g_{\Gamma\Theta}\}$, $\min_{\gamma=1,..., \Gamma; \theta=1,..., \Theta}(g_{\gamma,\theta})$ denotes the smallest element of the set G and max $_{\gamma=1,..., \Gamma; \theta=1,..., \Theta}(g_{\gamma,\theta})$ denotes the greatest element of the set G.

In particular, the first threshold ($T_1$) may be defined as follows. The distances $\{d_{j,s}\}_{j=1,..., K; s=1,..., Q}$ are computed are described above. Moreover, each image, $I_m$ (m=1,... T), of the second set of images is processed by using the trained machine learning model thereby obtaining a respective point, $P_m = (x_{m,1}, ..., x_{m,p})^T$, of the feature space. For each image $I_m$ (m=1,..., T) the respective point $P_m$ is used to compute a plurality of distances, $e_{m,1}, ... e_{m,Q}$, wherein Q is the number of categories of the plurality of categories and $e_{m,s}$ is the distance between the $P_m$ and the category point, $C_s=(x_{Ck,1}, ..., x_{Ck,p})^T$ associated with the $s^{th}$ category, e.g.

$$e_{m,s} = \sqrt{\sum_{i=1}^{p} (x_{CS,i} - x_{m,i})^2}.$$

In this case, the first threshold is given by the smallest of the distances $\{d_{j,s}\}_{j=1,..., K; s=1,..., Q}$ and $\{e_{m,s}\}_{m=1,..., T; s=1,..., Q}$, i.e., the smallest element of the union of the sets $\{d_{j,s}\}_{j=1,..., K; s=1,..., Q}$ and $\{e_{m,s}\}_{m=1,..., T; s=1,..., Q}$, i.e.,:

$$T_1 = \min_{j=1,..., K; m=1,...,T; s=1,..., Q}( d_{j,s}, e_{m,s} ).$$

The second threshold ($T_2$) may be defined as follows. For each image, $I_j$ (j=1,..., K), of the first set of images compute a respective smallest distance, $\delta_{1,j}$, and a respective second smallest distance, $\delta_{2,j}$, of the distances $\{d_{j,s}\}_{s=1,..., Q}$. Moreover, for each image, $I_j$ (j=1,..., K) compute a respective distance difference $D_j = \delta_{2,j} - \delta_{1,j}$. The second threshold, $T_2$, is

defined as the greatest of the differences $\{D_j\}_{j=1,...,K}$, i.e.

$$T_2 = \max_{j=1,...,K}(D_j).$$

According to the present invention, a notation of the type $\{h_\gamma\}_{\gamma=1,...,\Gamma}$ denotes the set, H, of $\Gamma$ elements $H = \{h_1, ...., h_\Gamma\}$, $\min_{\gamma=1,...,\Gamma}(h_\gamma)$ denotes the smallest element of the set H and $\max_{\gamma=1,...,\Gamma}(h_\gamma)$ denotes the greatest element of the set H.

In particular, the second threshold may be defined as the greatest of the differences $\{D_j\}_{j=1,...,K}$, and $\{E_m\}_{m=1,...,T}$, i.e., the greatest element of the union of the sets $\{D_j\}_{j=1,...,K}$, and $\{E_m\}_{m=1,...,T}$, i.e.,:

$$T_2 = \max_{j=1,...,K; m=1,...,T}(D_j, E_m),$$

wherein for each image each image, $I_m$ (m=1,..., T), of the second set of images $E_m = \eta_{2,m} - \eta_{1,m}$, wherein $\eta_{1,m}$ is the smallest distance and $\eta_{2,m}$ is the second smallest distance of the distances $\{e_{m,s}\}_{s=1,...,Q}$.

The third threshold ($T_3$) may be defined as follows. For each image, $I_j$ (j=1,..., K), of the first set of images compute a respective quotient, $R_j = D_j / \delta_{1,j}$. The third threshold, $T_3$, is defined as the greatest of the quotients $\{R_j\}_{j=1,...,K}$, i.e.

$$T_3 = \max_{j=1,...,K}(R_j)$$

In some embodiments, the third threshold may be defined by using the quotients $\{R_j\}_{j=1,...,K}$ and the quotients $\{U_m\}_{m=1,...,T}$, wherein, for each m = 1, ...,T, $U_m = E_m / \eta_{1,m}$. The third threshold, $T_3$, is defined as the greatest of the quotients $\{R_j\}_{j=1,...,K}$, and $\{U_m\}_{m=1,...,T}$, i.e., the greatest element of the union of the sets $\{R_j\}_{j=1,...,K}$, and $\{U_m\}_{m=1,...,T}$, i.e.,:

$$T_3 = \max_{j=1,...,K; m=1,...,T}(R_j, U_m).$$

As an alternative to the approach for determining the first threshold, the second threshold and the third threshold described above, each of the thresholds may be determined based on the variance of each container category in the training images.

Determining whether the container depicted in the first image belongs to one container category of the plurality of container categories or the container depicted in the first image does not belong to any container category of the plurality of container categories comprises computing, for each container category of the plurality of container categories, a distance between the respective category point and the point in the feature space representing the first image.

For each container category of the plurality of container categories, the respective category point may be an arithmetic mean of a respective set of points in the feature space. Each point of the respective set of points in the feature space may represent a respective training image. The respective training image may depict a container of the container category. The respective training image is comprised in the training images of containers used to train the first machine learning model, e.g., to train the neural network of the first machine learning model.

Accordingly, the respective category point may be a centroid or a center of mass of the respective set of points in the feature space.

In particular, the training images may be partitioned into a plurality of sets of training images, wherein each of sets of training images is associated with a respective category of the plurality of categories and comprises the training images that depict a container belonging to the respective category. For each category, q, of the plurality of categories, the set of training images, $S_q$, associated to said category q has a cardinality of $M_q$ images, $\{I_1, ..., I_{Mq}\}$. The category point, $C_q = (x_{Cq,1}, ... , x_{Cq,p})^T$ associated with said category q may be given by the following formula:

$$C_q = (x_{Cq,1}, ..., x_{Cq,p})^T = \frac{\sum_{t=1}^{S}(x_{q,t,1},...,x_{q,t,p})^T}{M_q},$$

wherein $(x_{q,t,1}, ..., x_{q,t,p})^T$ is the output of the hidden layer obtained by processing the image It of $S_q$ by using the trained first machine learning model.

The convolutional neural network may comprise an input layer and an output layer. The hidden layer may receive an input and the output of the hidden layer may have fewer values (i.e., fewer features) than the input. The output produced by the hidden layer may be one-dimensional and/or the output produced by the hidden layer may summarize a feature of the first image. The hidden layer may be a pooling layer, e.g., global max pooling layer. Use of the pooling layer as the hidden layer may have the advantage of providing a fixed sized output regardless of the size of the input image. This may provide for flexibility with regard to image processing (e.g., cropping) so that the first image depicts a suitable portion of the container.

The convolutional neural network may further comprise a dropout layer, e.g., after the pooling layer. In addition or alternatively, the convolutional neural network may comprise a fully connected layer, e.g., after the dropout layer. The fully connected layer may have a softmax activation function.

The determining of whether the container depicted in the first image belongs to one container category of the plurality of container categories or the container depicted in the first image does not belong to any container category of the plurality of container categories may be based on an output of the output layer of the first machine learning model.

The first rejection algorithm may be based on the output of the output layer of the first machine learning model. In other words, the first rejection algorithm may use the output of the output layer of the first machine learning model.

The output of the output layer of the first machine learning model may comprise information specifying, for each container category of the plurality of container categories, a respective probability that the container in the first image belongs to said container category.

In particular, the output comprises a plurality of probability values, wherein each probability of the plurality of probability values is associated with a respective container category of the plurality of categories and represent the likelihood that the input belongs to the respective container category. For example, for each container category of the plurality of container categories, a value between 0 and 1 may be output, where the value can be interpreted as a likelihood that the input belongs to the respective container category.

The determining of whether the container depicted in the first image belongs to one container category of the plurality of container categories or the container depicted in the first image does not belong to any container category of the plurality of container categories may comprise carrying out a first determination of whether the container depicted in the first image belongs to one container category of a plurality of container categories or the container depicted in the first image does not belong to any container category of the plurality of container categories. The first determination may comprise using the coordinates of the point representing the first image and the respective category points representing the container categories.

The determining of whether the container depicted in the first image belongs to one container category of the plurality of container categories or the container depicted in the first image does not belong to any container category of the plurality of container categories may further comprise carrying out a second determination of whether the container depicted in the first image belongs to one container category of a plurality of container categories or the container depicted in the first image does not belong to any container category of the plurality of container categories. The second determination may comprise using the output of the output layer of the convolutional neural network.

If the first determination differs from the second determination, the determining of whether the container depicted in the first image belongs to one container category of the plurality of container categories or the container depicted in the first image does not belong to any container category of the plurality of container categories may further comprise establishing that the container depicted in the first image does not belong to any container category of the plurality of container categories.

The determining of whether the container depicted in the first image belongs to one container category of the plurality of container categories or the container depicted in the first image does not belong to any container category of the plurality of container categories may be carried out by using one or more of the following: the point in the feature space representing the first image, the category points representing the respective container categories, and the distances between the point in the feature space representing the first image and the respective category points. In particular, said determination may be carried out by using the first, the second and the third thresholds, as described above.

Alternatively, the determining of whether the container depicted in the first image belongs to one container category of the plurality of container categories or the container depicted in the first image does not belong to any container category of the plurality of container categories may comprise carrying out a third determination and a fourth determination. The third determination may comprise determining which container category of the plurality of container categories the container depicted in the first image belongs. The third determination may be carried out by using the first machine learning model, the output of the hidden layer of the first machine learning model and the first image.

In some cases, the third determination may be carried out using one or more of the following: the point in the feature space representing the first image, the category points representing the respective container categories, and the distances between the point in the feature space representing the first image and the respective category points. More specifically, the third determination may be carried out by determining a category point of the category points representing the respective container categories that is closest to the point in the feature space representing the first image.

The fourth determination may comprise determining which container category of the plurality of container categories the container depicted in the first image belongs by using the output of the output layer of the first machine learning model. More specifically, the fourth determination may comprise determining which container category of the plurality of container categories the container depicted in the first image belongs using the highest of the respective probabilities comprised in the output of the output layer.

In the alternative approach described above, the set of conditions of the first rejection algorithm may comprise, e.g., consist of, a condition that the third determination is different from the fourth determination..

The second determination may comprise determining, by using the output of the first machine learning model, whether for each category of the plurality of container categories, the respective probability is below a probability threshold and if, for each category of the plurality of container categories the respective probability is below the probability threshold, establishing that the container depicted in the first image does not belong to any container category of the plurality of container categories.

A typical value for the probability threshold may be about 0.5. Exemplarily, the probability threshold, $T_\rho$, may be defined as follows. Each image, $I_j$ ($j=1,...,K$), of the first set of images is processed by using the trained machine learning model thereby obtaining the a plurality of probability values ($\rho_{j,1}, ... \rho_{j,Q}$), wherein Q is the number of container categories of the plurality of categories. The probability threshold may be defined as the maximum of the probability values $\{\rho_{j,s}\}_{j=1,...,K;\ s=1,...,Q}$:

$$T_\rho = \max_{j=1,...,K;\ s=1,...,Q}( \rho_{j,s} ).$$

If it is determined that the container depicted in the first image does not belong to any container category of the plurality of container categories, the method may further comprise obtaining a second image depicting at least a portion of the container. The second image may differ from the first image. The method may further comprise determining, using a second machine learning model and the second image, whether the container depicted in the first image belongs to one container category of a plurality of container categories or the container depicted in the first image does not belong to any container category of the plurality of container categories.

The first image may be a side view of the container and/or the second image may be a top view of the container. Alternatively, the first image may be a top view of the container and/or the second image may be a side view of the container. The second image may be a new image distinct from the first image. Hence, the first image and the second image may be separately captured images.

The second machine learning model may be trained to classify containers in the plurality of container categories using training images of containers. The training images of containers used to train the second machine learning model may differ from the training images of containers used to train the first machine learning model. For example, the first machine learning model may be trained to classify containers in the plurality of container categories using training images of containers depicting a side view of the respective container. The second machine learning model may be trained to classify containers in the plurality of container categories using training images of containers depicting a top view of the respective container.

Determining, using the second machine learning model and the second image, whether the container depicted in the first image belongs to one container category of the plurality of container categories or the container depicted in the first image does not belong to any container category of the plurality of container categories may comprise using a second rejection algorithm. Hence, the second rejection algorithm may correspond to the first rejection algorithm described above, however one or more of the first threshold, the second threshold and the third threshold of the second rejection algorithm may differ from the corresponding thresholds of the first rejection algorithm.

Use of the first machine learning model and the first image, as described above, may typically be sufficient to establish a container category of the container depicted in the first image. Hence, the second image is only used if needed. The degree of accuracy of the first machine learning model in establishing the container category may be high enough such that use of the second image is relatively rare. Accordingly, container categories of containers may be established more efficiently, without needing multiple images and without reference to the label or machine-readable code of the container.

In some cases, after establishing that the container category of the container depicted in the first image is the container category represented by the respective category point closest to the coordinates of the point representing the first image, the method may further comprise determining a subcategory of the established container category. Determining the subcategory of the established container category may comprise determining, using a third machine learning model and a third image, whether the container depicted in the first image belongs to one container subcategory of a plurality of container subcategories or the container depicted in the first image does not belong to any container subcategory of the plurality of container subcategories. Determining the subcategory of the established container category may further comprise using a third rejection algorithm.

The third image may differ from the first image. The third image may be the same as the second image or may differ from the second image. The third image may be captured separately from the first image and/or the second image.

The third rejection algorithm may use an output of a hidden layer of the third machine learning model. The third machine learning model may comprise a convolutional neural network. The hidden layer of the third machine learning model may be part of the convolutional neural network. The output of the hidden layer of the third machine learning model may be associated with coordinates of a point in a further feature space, the coordinates of the point representing the third image.

Determining whether the container depicted in the first image belongs to one container subcategory of the plurality of container subcategories or the container depicted in the first image does not belong to any container subcategory of the plurality of container subcategories may comprise obtaining, for each container subcategory of the plurality of container subcategories, a respective subcategory point to represent said container subcategory.

Hence, the third rejection algorithm may be based on one or more of the subcategory points representing the plurality of container subcategories.

Moreover, the third rejection of algorithm may be based on a third distance and a fourth distance. The third distance may be a distance between the point in the further space representing the third image and a first subcategory point representing a container subcategory that is closest to the point in the further feature space representing the third image. The fourth distance may be a distance between the point in the further feature space representing the third image and a second subcategory point representing a container subcategory that is second closest to the point in the further feature space representing the third image. The determining of whether the container depicted in the first image belongs to one container subcategory of the plurality of container subcategories or the container depicted in the first image does not belong to any container subcategory of the plurality of container subcategories may comprise obtaining the third distance and obtaining the fourth distance. In particular, determining whether the container depicted in the first image belongs to one container category of the plurality of container categories or the container depicted in the first image does not belong to any container subcategory of the plurality of container subcategories comprises computing, for each container subcategory of the plurality of container subcategories, a distance between the respective subcategory point and the point in the further feature space representing the third image.

Exemplarily, if at least one condition of a set of conditions of the third rejection algorithm is fulfilled, the method may further comprise establishing that the container does not belong to any container subcategory of the plurality of container subcategories. If none of the conditions of the set of conditions of the third rejection algorithm is fulfilled, the method may further comprise establishing that a container subcategory of the container depicted in the first image is the container subcategory represented by the respective subcategory point closest to the coordinates of the point representing the second image.

The set of conditions of the third rejection algorithm may comprise one or more of the following conditions:

$$d_3 > T_5$$ - the third distance ($d_3$) is greater than a fifth threshold ($T_5$)

$$D_2 = d_4 - d_3 < T_6$$ - a second distance difference ($D_2$) between the fourth distance ($d_4$) and the third distance ($d_3$) is less than a sixth threshold ($T_6$)

$$R_2 = \frac{D_2}{d_3} < T_7$$ - a second quotient ($R_2$) of the second distance ($D_2$) difference divided by the third distance ($d_3$) is less than a seventh threshold ($T_7$).

The fifth threshold may be computed, mutatis mutandis, in a manner similar to the first threshold. The sixth threshold may be computed, mutatis mutandis, in a manner similar to the second threshold. The seventh threshold may be computed, mutatis mutandis, in a manner similar to the third threshold.

The third image may depict a portion of the container that is the same as the portion of the container depicted in the second image or the first image. However, said portion may be depicted from a different perspective. Alternatively, the third image may depict a portion of the container that differs from the portion of the container depicted in the first image and also differs from the portion of the container depicted in the second image.

The portion of the container may comprise a physical component of the container. For example, the container may comprise multiple physical components, including a body and a closure, e.g. a cap. The physical component of the container may be detachable. For example, the physical component of the container may be the closure, wherein the closure is detachable from the container.

In particular, the first image may be a first region of interest of a fourth image, the fourth depicting at least a portion container, wherein, in particular, the fourth image depicting the container can be taken by using the image capture device of the TIU. Exemplarily, obtaining the first image may comprise obtaining (e.g., taking and/or receiving) the fourth image, detecting the first region of interest in the latter image and obtaining the first image from the fourth image, e.g., by cropping the latter image.

Accordingly, in some cases, determining whether the container depicted in the first image belongs to one container category of the plurality of container categories or the container depicted in the first image does not belong to any container category of the plurality of container categories may be carried out using the first region of interest of the fourth image depicting the container. The first region of interest may depict the portion of the container and, for instance, provide a side view of said portion.

For example, the fourth image may include multiple regions of interest including the top view of the container and the side view of the container.

For example, one or more mirrors in the fourth image may capture the container from different angles. Accordingly, one or more of the regions of interest may be depicted in respective mirrors in the fourth image. For example, the top view may be depicted in a mirror in the fourth image and/or the top view is directly depicted in the fourth image.

In some examples, the second image may be a second region of interest of the fourth image (e.g., comprising a top view of at least a portion of the container). In particular, obtaining the second image may comprise obtaining (e.g., taking and/or receiving) the fourth image, detecting the second region of interest in the latter image and obtaining the second image from the fourth image, e.g., by cropping the latter image.

Exemplarily, the third image may be a third region of interest of the fourth image (e.g., comprising a further side view of at least a portion of the container). In particular, obtaining the third image may comprise obtaining (e.g., taking and/or receiving) the fourth image, detecting the third region of interest in the latter image and obtaining the third image from the fourth image, e.g., by cropping the latter image.

The first region of interest, the second region of interest and the third region of interest may differ from each other.

One or more of the images discussed above may be processed, e.g., cropped, before being obtained. The cropping may be carried out based on the orientation and/or position of the container with respect to a gripper.

As discussed above, one or more of the first image, the second image and the third image may be captured independently of the other images.

Optionally, one or more of the regions of interest depict the closure, e.g., the cap, of the container. In addition or alternatively, one or more of the regions of interest may depict the body of the container, e.g., to enable a distinction between different container shapes and volumes. The regions of interest may be selected using edge detection analysis. The edge detection analysis may comprise:

applying a filter (e.g., Gaussian or adaptive) to smooth the image in order to remove noise;
finding intensity gradients of the image;
applying gradient magnitude thresholding or lower bound cut-off suppression to remove a spurious response to edge detection;
applying a double threshold to determine potential edges;
tracking edges by hysteresis.

For example the Canny algorithm (e.g., from the OpenCV library) may be used for edge detection. Other algorithms or variations are also possible, e.g., a variation of the Canny algorithm including Curvelets.

According to a second aspect, a computer program is provided. The computer program comprises instructions that, when the program is executed by computer, cause the computer to carry out the method as described above.

According to a third aspect, a computer readable medium storing the computer program according to the second aspect is provided.

According to a fourth aspect, a data processing system comprising means for carrying out the method described above is provided.

According to a fifth aspect, a laboratory instrument comprising the data processing system according to the fourth aspect is provided. In particular, the laboratory instrument may comprise the TIU, e.g., as described herein. For instance, the TIU and the data processing system are in data communication with one another, so that the TIU may provide images taken by the TIU, e.g., the first the second and/or the third image as described herein, to the data processing system.

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine readable medium, where the medium is embodied in one or more information carriers, such as a CD-ROM, a DVD-ROM, a semiconductor memory, or a hard disk. In particular, disclosed subject matter may be tangibly embodied in a non-transitory machine (computer) readable medium.

In addition, the subject matter described in the present disclosure can be implemented as a system including a processor, and a memory coupled to the processor. The memory may encode one or more programs to cause the processor to perform one or more of the methods described in the application. Further subject matter described in the present disclosure can be implemented using various machines.

Details of one or more implementations are set forth in the exemplary drawings and description that follow. Other features will be apparent from the description, the drawings, and from the claims.

Brief Description of the Figures

Figure 1 shows a schematic representation container identification unit and a computing device according to some embodiments.
Figure 2 shows containers having various closures.
Figure 3 shows a flow chart including steps of a method according to some embodiments.
Figure 4 shows further steps that may be carried out for step 303 of figure 3.
Figure 5 shows an exemplary machine learning model according to some embodiments.

Detailed Description

In the following text, a detailed description of examples will be given with reference to the drawings. Various modifications to the examples may be made. In particular, one or more elements of one example may be combined and used in other examples to form new examples.

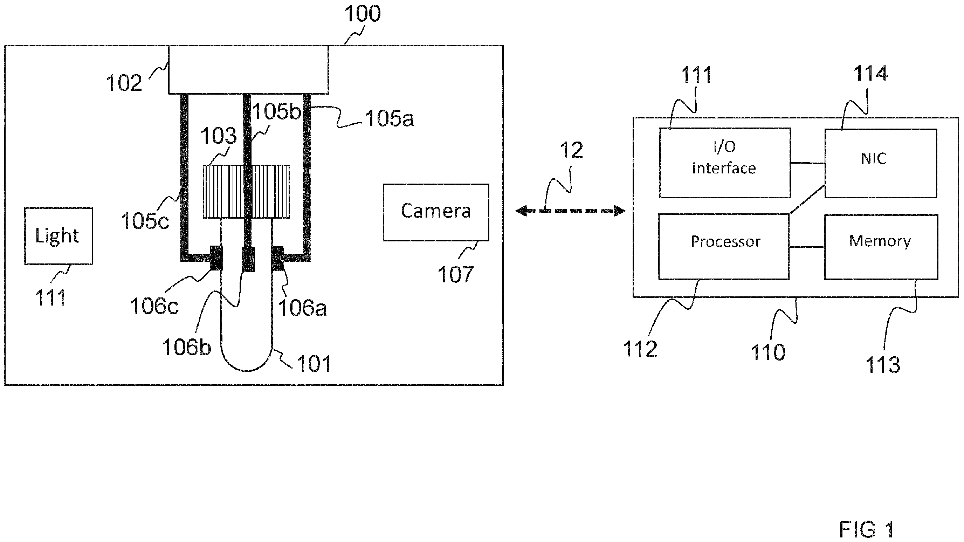

**Figure 1** shows components of a container identification unit, e.g., a tube identification unit 100. The tube identification unit may be part of an automated laboratory system (ALS). The automated laboratory system may be part of a laboratory. The container identification unit 100 includes a gripper 102 with a plurality of arms 105a, 105b, 105c (e.g., four arms), a camera 107 and a light 111. The camera 107 is positioned within the container identification unit 100. The gripper 102 is configured to hold a container 101, e.g., by using the plurality of arms 105a, 105b, 105c, at the identification position. The plurality of arms 105a, 105b, 105c may comprise respective points of attachment 106a, 106b, 106c to the container 101. One or more arms of the gripper 105 may contact the closure 103 when the container 101 is being held by the gripper 105. The gripper 105 may be movable in one or more directions, e.g., to move the container between a loading/unloading position (not shown) and the identification position. The loading/unloading position is, in particular, a position at which the container 101 is loaded in the container identification unit 100 and from which the container 101 is unloaded from the container identification unit 100. In particular, the camera 107 is configured to capture images of at least a portion of the container 101 when the container 101 is at the identification position and the image capture device is at the predetermined location.

As depicted, the container 101 may be implemented as a tube (e.g., a test tube). The container 101 may have a volume of between about 1 ml and about 100 ml, more specifically between about 10 ml and about 20 ml. The container 101 may contain a biological sample. The biological sample may be associated with a patient undergoing treatment at a medical facility, e.g., a hospital. The container 101 may be in the laboratory in order to perform a clinical test on the biological sample by means of the ALS or a laboratory instrument of the ALS. The container 101 may be made of one or more of a variety of materials, for example, a ceramic (such as glass) or a synthetic material such as plastic.

The container comprises a closure 103 applied thereto so as to close an open end of the container 101. The closure 103 may be implemented as a cap, a stopper, or other means of sealing or closing the container 101. The closure 103 may be part of the container 101 (e.g., included with the container 101) and/or the closure 103 may be detachable from the container 101. The closure 103 may be provided in a variety of shapes, sizes, and colors. The closure 103 may include a top portion, a bottom portion, and a body portion in between the top portion and the bottom portion. In some cases, the closure 103 may be approximately cylindrical and/or the bottom portion of the closure 103 may have a diameter slightly larger than a diameter of the container 101. The closure 103 may have minimal variation in diameter from the bottom portion to the top portion. Alternatively, the closure 103 may gradually decrease in diameter from the bottom portion to the top portion. As another alternative, the closure 103 may have a reduced diameter (e.g., about 1/3 or about 1/2 of the diameter of the bottom portion) in the body portion, which may begin at about one third of the distance from the bottom of the closure 103 to the top of the closure 103.

The closure 103 may include a plurality of ridges encircling or partially encircling the body portion. The ridges may be longitudinal or in a vertical direction. The closure 103 may also include one or more lateral protrusions, which might or might not be symmetrical. The closure 103 may be made of a synthetic or semisynthetic material, including one or more polymers, e.g., plastic. Characteristics of the closure 103 may provide an indication regarding the biological material in the container 101 and/or the clinical test.

One or more images (e.g., a first image, a second image, a third image) of a portion of the container 101 and/or a portion of the closure 103 may be taken by the camera 107. The camera 107 may be in data communication 12 with a computing device 110.

The container identification unit 100 may comprise a mirror (not shown). The mirror may be arranged within the container identification unit 100 in such a way that the camera may capture images depicting a portion of the container 101, a portion of the closure 103 and at least a portion of the mirror. The mirror may be positioned and/or arranged with respect to the identification location and the predetermined position of the camera 107 in such a way that the mirror is captured in the images and the top of the closure 103 is depicted in the mirror captured in the images. In this way, one of the images taken by the camera 107 may include a directly depicted side view as well as a top view depicted in the mirror. A first region of interest in the image may include the side view and a second region of interest in the image may include the top view. Accordingly, the first region of interest may be identified as the first image and the second region of interest may be identified as the second image. In this way, a single image taken by the camera 107 may serve as a basis for the first image, the second image, and possibly a third image.

The light 111 may illuminate the container 101, the closure 103 and the mirror 109 in order to facilitate the creation of usable images by the camera 107.

Exemplarily, the computing device 110 comprises a processor 112 (e.g. a CPU, a GPU, or the like), and a memory 113. The processor 112 is configured to carry out the method according to the present invention. The memory 113 may comprise a primary memory and a secondary memory (not shown). In particular, the secondary memory stores a computer program comprising instructions which, when executed by the processor 113, cause the computing device 110 to carry out the method according to the present invention. The computing device 110 may also comprise a input output (I/O) interface 111 for communicating with input/output units, such as a screen, a keyboard, a touch screen, a printer, or the like.

Furthermore, the computing device 110 may comprise a Network Interface Controller (NIC) 114 configured to connect said device with one or more networks (e.g. an intranet, the internet, a cellular network, or the like). In other examples, the computing device 110 may comprise a plurality of NICs. In particular, the computing device 110 is in data communication 12 with the container identification unit 100, e.g., with the camera 107 and/or a computer (not shown) comprised in the container identification unit 100, by means of the NIC 114. In particular, the computing device 110 receives the images (e.g., the first image, the second image, the third image) captured by the camera 107. In some embodiments, the computing device 110 may be a part of the container identification unit and the data transfer may occur via a bus (not shown).

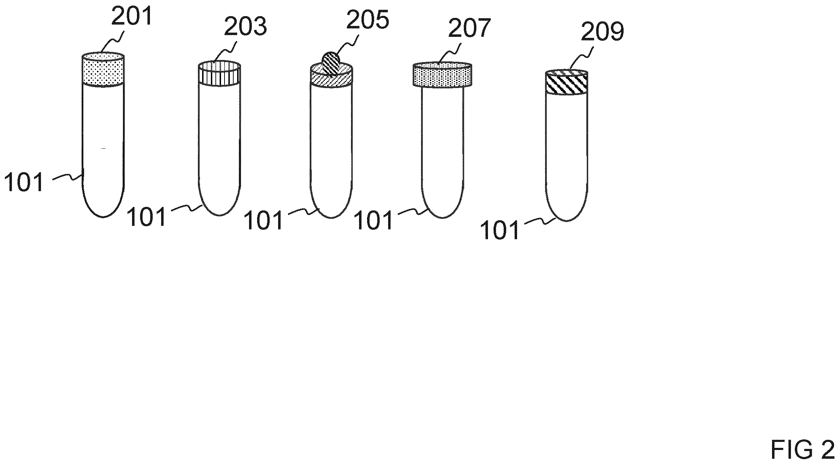

**Figure** 2 shows examples of the container 101 along with closures 201 to 209. In comparison to the closure 103, the closure 201 is lighter in color and has a diameter such that the closure 201 does not extend beyond the edge of the container 101. In comparison to the closure 201, the closure 203 is darker in color and has a reduced height. In comparison to the closure 203, the closure 205 is darker in color and narrows in diameter from the bottom of the closure 205 to the top of the closure 205. In comparison to the closure 205, the closure 207 has a consistent diameter from top to bottom and extends beyond the edge of the container 101. In comparison to the closure 207, the closure 209 does not extend beyond the edge of the container 101 and has a different color. Other closure variations are also possible, e.g. a closure having a portion of that, when the closure is applied to the container 101, is included inside the container 101.

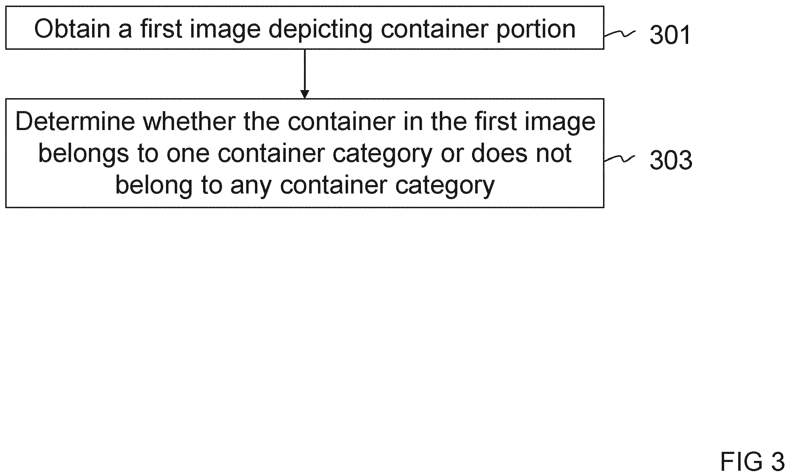

**Figure 3** shows a flowchart including steps of a method according to some embodiments. In particular, the steps depicted in figure 3 may be carried out by the computing device 110 and, in some embodiments, by the container identification unit 100, as described above and schematically depicted in figure 1. Step 301 comprises obtaining a first image depicting at least a portion of the container 101, e.g., the portion of the container 101 may include the closure 103 or one of the closures 201 to 209. In some cases, obtaining the first image may include receiving, e.g. by the computing device 100, the first image captured by camera 107 from the container identification unit 100. In some cases, obtaining the first image may further include capturing, e.g., by the camera 107, the first image. Exemplarily, obtaining the first image may include receiving, e.g. by the computing device 100, the fourth image captured by camera 107 from the container identification unit 100. and processing the fourth image to determine the first image, e.g., the first region of interest. In particular, obtaining the first image may further include capturing, e.g., by the camera 107, the fourth image.

Step 303 comprises determining, using the first machine learning model, the first image and the first rejection algorithm, whether the container depicted in the first image belongs to one container category of a plurality of container categories or the container depicted in the first image does not belong to any container category of the plurality of container categories. The first rejection algorithm uses the output of the hidden layer of the first machine learning model. The first machine learning model is trained to classify containers in the plurality of container categories using training images of containers. Each of the training images of the containers corresponds to exactly one container category of the plurality of container categories. For instance, the plurality of container categories may consist of about 12 container categories, about 20 container categories or between 10 and 25 container categories.

Each category of the plurality of container categories is associated with a respective category point of the plurality of category points. For each container category of the plurality of container categories, the respective category point may be the arithmetic mean of a respective set of points in the feature space, wherein each point of the respective set of points in the feature space represents a respective training image, the respective training image depicting a container of the respective container category.

The first rejection algorithm may be based on the point in the feature space that represents the first image. Moreover, the first rejection algorithm may be based on one or more of the category points representing the plurality of container categories. The first rejection algorithm may comprise one or more rejection conditions.

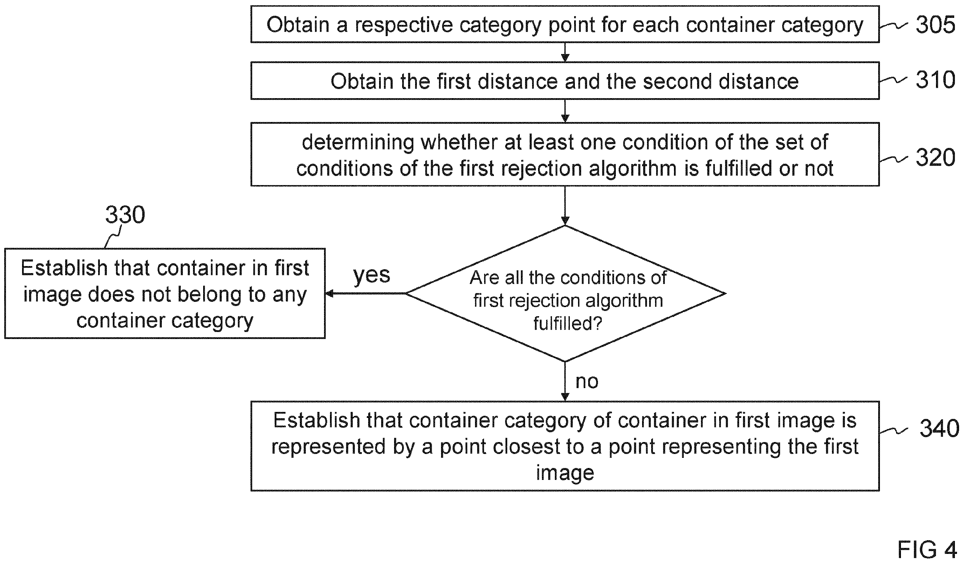

**Figure 4** shows a flowchart including steps that may be comprised in step 303, as described above and depicted in figure 3. The steps depicted in figure 4 may be carried out by the computing device 110, as described above and schematically depicted in figure 1.

Step 305 includes obtaining, for each container category of the plurality of container categories, a respective category point to represent said container category. Step 305 may comprise accessing a memory, e.g., the memory 113 of the computing device 110 to retrieve, for each container category of the plurality of container categories, the coordinates of the respective category point.

Step 310 comprises obtaining the first distance and the second distance. More specifically, step 310 may comprise computing, for each container category of the plurality of container categories, a respective distance between the point in the feature space representing the first image and the respective category point, thereby obtaining a plurality of distances. The first distance is, in particular, the smallest of the plurality of distances, i.e., the distance between the point in the feature space representing the first image and a first category point, wherein the first category point is, among the plurality of category points, the closest to the point in the feature space representing the first image. The first category point is associated with a respective first container category. The second distance is, in particular, the second smallest of the plurality of distances, i.e., the distance between the point in the feature space representing the first image and a second category point, wherein the second category point is, among the plurality of category points, the second closest to the point in the feature space representing the first image.

Exemplarily, the first rejection algorithm may comprise a set of conditions. For instance, the set of conditions comprises a first condition and a second condition, the first and second conditions being based on the first distance, $d_1$, on the second distance, $d_2$, on the first threshold, $T_1$, and the second threshold, $T_2$. In particular, the first condition, $\Gamma_1$ and the second condition $\Gamma_2$, read as follows:

$$\Gamma_1: \; d_1 > T_1 \qquad \text{and} \qquad \Gamma_2: D = d_2 - d_1 < T_2.$$

The first threshold and the second threshold my be obtained as described above. In particular, T1 may be equal to 4 and T2 may be equal to 1.

Step 320 comprises determining whether at least one condition of the set of conditions of the first rejection algorithm is fulfilled or not.

If at least one condition of a set of conditions of the first rejection algorithm is fulfilled, step 330 may comprise establishing that the container does not belong to any container category of the plurality of container categories. In some embodiments, a user is notified, e.g., by the computing device 110 by using the I/O interface 111, that the container does not belong to any container category of the plurality of container categories. In this case, the method may comprise instructing the ALS to move the container 101 to an error region of the ALS.

If none of the conditions of the set of conditions of the first rejection algorithm is fulfilled, step 340 may comprise establishing that a container category of the container depicted in the first image is the first container category, i.e., the container category represented by the first category point, i.e., the category point closest to the coordinates of the point representing the first image.

The set of conditions of the first rejection algorithm may be tested one at a time, such that once a condition is fulfilled no further conditions are tested and it is established that the container does not belong to any container category of the plurality of container categories.

For example, e.g., when the set of conditions consists of the first condition, $\Gamma_1$, and the second condition, $\Gamma_2$, the condition $\Gamma_1$ is checked first. If $\Gamma_1$ is fulfilled, i.e. $d_1 > T_1$, condition $\Gamma_2$ is not checked and step 330 is carried out. If condition $\Gamma_1$ is not fulfilled, $\Gamma_2$ is checked. If $\Gamma_2$ is fulfilled, step 330 is carried out. If $\Gamma_2$ is not fulfilled step 340 is carried out.

In some cases, e.g., when the set of conditions consists of the first condition, $\Gamma_1$, and the second condition, $\Gamma_2$, the condition $\Gamma_2$ is checked first. If $\Gamma_1$ is fulfilled, i.e., $d_2 - d_1 < T_2$, condition $\Gamma_1$ is not checked and step 330 is carried out. If condition $\Gamma_2$ is not fulfilled, $\Gamma_1$ is checked. If $\Gamma_1$ is fulfilled, i.e., $d_1 > T_1$, step 330 is carried out. If $\Gamma_1$ is not fulfilled, step 340 is carried out.

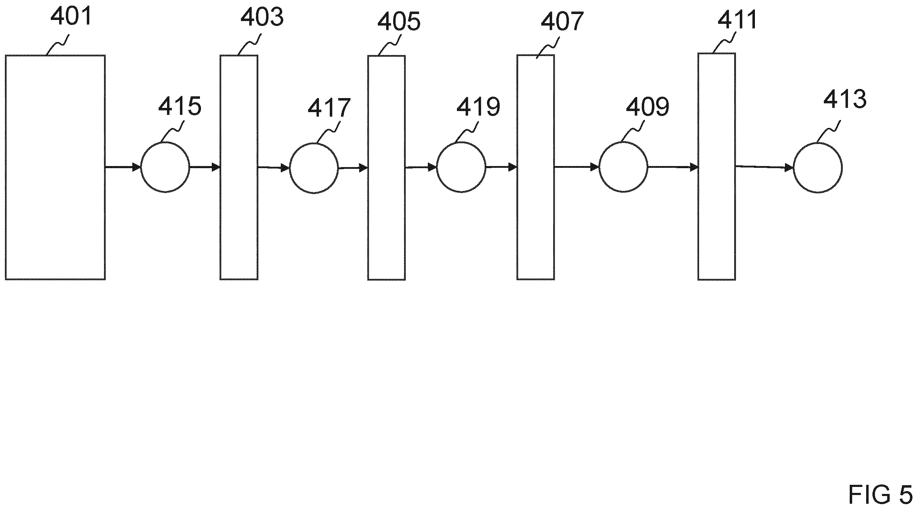

**Figure 5** shows the first machine learning model. In particular, the first machine learning model is trained to process images depicting at least a portion of the container 101 and/or of the closure 103 (e.g., the first image) to classify containers in the plurality of container categories. The first machine learning model may comprise a pre-trained neural network 401.

In addition, the first machine learning model may comprise a plurality of additional layers 403, 405, 407, 411 of the first machine learning model.

The layer 403 may be implemented as a convolutional a layer. In particular, the convolutional layer 403. As shown in figure 4, an input 415 (which, in particular, is the output of the neural network 401) is provided to the convolutional layer 403. This layer 403 processes the input 415 to generate one or more outputs 417. This processing may include convolving the input 415 with a set of filters, each of which would identify a type of feature from the input 415 and, ultimately, from the underlying image (e.g., the first image), that would then be captured in that filter's corresponding transformed image. For instance, as a simple example, convolving the input 415 with the filter below:

$$\begin{bmatrix} -1 & -1 & -1 \\ -1 & 8 & -1 \\ -1 & -1 & -1 \end{bmatrix}$$

could generate an output 417 capturing edges from the input 415.

The layer 405 may be implemented as a batch normalization layer. The batch normalization layer may be used to make the first machine learning model more stable during training. In some embodiments, during training, the batch normalization layer 405 processes the input 417, $(y_1, ..., y_V)$, associated with a training image and generates the output 419, $(z_1, ..., z_V)$ associated with that training image, wherein, for each j=1,...,V, the following relation holds:

$$z_j = \frac{\gamma_j(y_j - \mu_j)}{\sqrt{(\sigma_j^2 + \varepsilon)}} + \delta_j, \qquad (2)$$

wherein $\mu_j$ and $\sigma_j^2$ are respectively the mean and the standard deviation of the $j^{th}$ components of the inputs 417 associated with the training images of the batch to which the aforementioned training image belongs. The parameters $\gamma_j$ and $\delta_j$ are the parameters of the batch normalization layer 405 that have to be set during training. The parameter $\varepsilon$ is a small, predetermined constant that e.g., may be equal to 0.001. In some embodiments, during inference, the output 419 associated with an image may be generated by using equation (2) in which $\mu_j$ and $\sigma_j^2$ are respectively replaced by a moving average of the mean and a moving average of the standard deviation of the batches used during training.

The layer 407 may be implemented as a global pooling layer. In particular, the pooling layer 407 generates the output 409 by processing the input 419 (i.e., the output of the layer 405). This may be done, for example, by organizing the input 419 into a set of regions, and then replacing the values in each respective region with a single value, such as the maximum value for the region or the average of the values for the region. The result would be the output 409 whose resolution would be reduced relative to its corresponding input 419 based on the size of the regions it was split into. For instance, if the input 419 had NxN dimensions, and it was split into 2x2 regions, then the output 409 would have size (N/2) x(N/2).

The layer 407 may be referred to as the hidden layer or a first hidden layer. The output 409 is used by the first rejection algorithm, e.g., provided as an input to the first rejection algorithm.

The layer 411 may be a fully connected layer that produces the output 413 of the first machine learning model by processing the input 419 (i.e., the output of the first hidden layer 407). In particular, the output 413 comprises a plurality of probability values, wherein each probability of the plurality of probability values is associated with a respective container category of the plurality of categories and represents the likelihood that the input belongs to the respective container category. For example, for each container category of the plurality of container categories, a value between 0 and 1 may be output, where the value can be interpreted as a likelihood that the input belongs to the respective container category. Exemplarily, if the plurality of container categories consists of N (e.g., 12 or 20) container categories, the output 413 comprises N probability values.

In addition to the first machine learning model, a second machine learning model and a third machine learning model may be provided. The second and third machine learning models may each comprise a pre-trained neural network, e.g., similar to the pre-trained neural network 401. In addition, the second and third machine learning models may comprise a plurality of additional layers, e.g., similar to the additional layers 403, 405, 407, 411 of the first machine learning model. More specifically the second and third machine learning models may each include a convolutional layer, a batch normalization layer, a global pooling layer, a fully connected layer and an output layer. The second and third machine learning models may differ from the first machine learning model (and each other) in that they are trained using different images than the first machine learning model and, hence, after training, have different weights and biases.

**Claims**

1. A computer-implemented method, the method comprising:

   obtaining a first image depicting at least a portion of a container;
   determining, using a first machine learning model, the first image and a first rejection algorithm, whether the container depicted in the first image belongs to one container category of a plurality of container categories or the container depicted in the first image does not belong to any container category of the plurality of container categories;
   wherein the first rejection algorithm uses an output of a hidden layer of the first machine learning model;

wherein the first machine learning model is trained to classify containers in the plurality of container categories using training images of containers,

wherein each of the training images of the containers corresponds to exactly one container category of the plurality of container categories.

2. The method of claim 1, wherein the first machine learning model comprises a convolutional neural network,

wherein the hidden layer is part of the convolutional neural network;

wherein the output of the hidden layer is associated with coordinates of a point in a feature space, the coordinates of the point representing the first image.

3. The method of claim 2, wherein the determining of whether the container depicted in the first image belongs to one container category of the plurality of container categories or the container depicted in the first image does not belong to any container category of the plurality of container categories comprises obtaining, for each container category of the plurality of container categories, a respective category point to represent said container category.

4. The method of claim 3, wherein the first rejection algorithm is based on one or more of the category points representing the plurality of container categories.

5. The method of claim 4, wherein the first rejection algorithm is based on at least a first distance and a second distance,

wherein the first distance is a distance between the point in the feature space representing the first image and a first category point, the first category point representing a container category that is closest to the point in the feature space representing the first image, and

wherein the second distance is a distance between the point in the feature space representing the first image and a second category point representing a container category that is second closest to the point in the feature space representing the first image.

6. The method of claim 5, wherein the determining of whether the container depicted in the first image belongs to one container category of the plurality of container categories or the container depicted in the first image does not belong to any container category of the plurality of container categories comprises:

obtaining the first distance;

obtaining the second distance;

if at least one condition of a set of conditions of the first rejection algorithm is fulfilled, establishing that the container does not belong to any container category of the plurality of container categories;

and, if none of the conditions of the set of conditions of the first rejection algorithm is fulfilled, establishing that a container category of the container depicted in the first image is the container category represented by the respective category point closest to the coordinates of the point representing the first image,

wherein the set of conditions of the first rejection algorithm comprise one or more of the following conditions:

the first distance is greater than a first threshold;

a distance difference between the second distance and the first distance is greater than a second threshold; and

a quotient of the distance difference divided by the first distance is less than a third threshold.

7. The method of claim 3 to 6, wherein, for each container category of the plurality of container categories the respective category point is an arithmetic mean of a respective set of points in the feature space, wherein each point of the respective set of points in the feature space represents a respective training image, the respective training image depicting a container of the respective container category.

8. The method of any one of the preceding claims, wherein the determining of whether the container depicted in the first image belongs to one container category of the plurality of container categories or the container depicted in the first image does not belong to any container category of the plurality of container categories is based on an output of an output layer of the first machine learning model;

wherein the first rejection algorithm may be based on the output of the output layer of the first machine learning model.

9. The method of claim 8, wherein the output of the output layer of the first machine learning model comprises information specifying, for each container category of the plurality of container categories, a respective probability that the container in the first image belongs to said container category.

10. The method of claim 8 or 9, wherein the determining of whether the container depicted in the first image belongs to one container category of the plurality of container categories or the container depicted in the first image does not belong to any container category of the plurality of container categories comprises:

carrying out a first determination of whether the container depicted in the first image belongs to one container category of a plurality of container categories or the container depicted in the first image does not belong to any container category of the plurality of container categories,
wherein the first determination comprises using the coordinates of the point representing the first image and the respective category points representing the container categories;
carrying out a second determination of whether the container depicted in the first image belongs to one container category of a plurality of container categories or the container depicted in the first image does not belong to any container category of the plurality of container categories,
wherein the second determination comprises using the output of the output layer of the convolutional neural network; and
if the first determination differs from the second determination, establishing that the container depicted in the first image does not belong to any container category of the plurality of container categories.

11. The method of claim 10 in combination with claim 9, wherein the second determination comprises:
determining, by using the output of the first machine learning model, whether, for each category of the plurality of container categories, the respective probability is below a probability threshold and if, for each category of the plurality of container categories, the respective probability is below the probability threshold, establishing that the container depicted in the first image does not belong to any container category of the plurality of container categories.

12. The method of any one of the preceding claims,

wherein, if it is determined that the container depicted in the first image does not belong to any container category of the plurality of container categories, the method further comprises:
obtaining a second image depicting at least a portion of the container, wherein the second image differs from the first image; and
determining, using a second machine learning model and the second image, whether the container depicted in the first image belongs to one container category of a plurality of container categories or the container depicted in the first image does not belong to any container category of the plurality of container categories;
wherein the first image may be a side view of the container and/or the second image may be a top view of the container.

13. A computer program comprising instructions that, when the program is executed by a computer, cause the computer to carry out the method of any one of the preceding claims.

14. A computer-readable medium storing the computer program of claim 13.

15. A data processing system comprising means for carrying out the method according to any one of claims 1 to 12.

**Amended claims in accordance with Rule 137(2) EPC.**

1. A computer-implemented method, the method comprising:

obtaining a first image depicting at least a portion of a laboratory container (101);
determining, using a first machine learning model, the first image and a first rejection algorithm, whether the laboratory container (101) depicted in the first image belongs to one container category of a plurality of container categories or the laboratory container (101) depicted in the first image does not belong to any container category of the plurality of container categories;
wherein the first rejection algorithm uses an output of a hidden layer of the first machine learning model;
wherein the first machine learning model is trained to classify containers in the plurality of container categories using training images of containers,
wherein each of the training images of the containers corresponds to exactly one container category of the plurality of container categories,
wherein the first machine learning model comprises a neural network,
wherein the hidden layer is part of the neural network;
wherein the output of the hidden layer is associated with coordinates of a point in a feature space, the coordinates of the point representing the first image,
wherein the first rejection algorithm is based on the point in the feature space that represents the first image and on one or more of category points representing the plurality of container categories.

2. The method of claim 1, wherein the determining of whether the laboratory container (101) depicted in the first image belongs to one container category of the plurality of container categories or the laboratory container (101) depicted in the first image does not belong to any container category of the plurality of container categories comprises obtaining, for each container category of the plurality of container categories, a respective category point to represent said container category.

3. The method of claim 1, wherein the first rejection algorithm is based on at least a first distance and a second distance,

wherein the first distance is a distance between the point in the feature space representing the first image and a first category point, the first category point representing a container category that is closest to the point in the feature space representing the first image, and
wherein the second distance is a distance between the point in the feature space representing the first image and a second category point representing a container category that is second closest to the point in the feature space representing the first image.

4. The method of claim 3, wherein the determining of whether the laboratory container (101) depicted in the first image belongs to one container category of the plurality of container categories or the laboratory container (101) depicted in the first image does not belong to any container category of the plurality of container categories comprises:

obtaining the first distance;
obtaining the second distance;
if at least one condition of a set of conditions of the first rejection algorithm is fulfilled, establishing that the laboratory container (101) does not belong to any container category of the plurality of container categories; and, if none of the conditions of the set of conditions of the first rejection algorithm is fulfilled, establishing that a container category of the laboratory container (101) depicted in the first image is the container category represented by the respective category point closest to the coordinates of the point representing the first image, wherein the set of conditions of the first rejection algorithm comprise one or more of the following conditions:

the first distance is greater than a first threshold;
a distance difference between the second distance and the first distance is greater than a second threshold; and
a quotient of the distance difference divided by the first distance is less than a third threshold.

5. The method of claim 2 to 4, wherein, for each container category of the plurality of container categories the respective category point is an arithmetic mean of a respective set of points in the feature space, wherein each point of the respective set of points in the feature space represents a respective training image, the respective training image depicting a container of the respective container category.

6. The method of any one of the preceding claims, wherein the determining of whether the laboratory container (101) depicted in the first image belongs to one container category of the plurality of container categories or the laboratory container (101) depicted in the first image does not belong to any container category of the plurality of container categories is based on an output of an output layer of the first machine learning model;
wherein the first rejection algorithm may be based on the output of the output layer of the first machine learning model.

7. The method of claim 6, wherein the output of the output layer of the first machine learning model comprises information specifying, for each container category of the plurality of container categories, a respective probability that the laboratory container (101) in the first image belongs to said container category.

8. The method of claim 6 or 7, wherein the determining of whether the laboratory container (101) depicted in the first image belongs to one container category of the plurality of container categories or the laboratory container (101) depicted in the first image does not belong to any container category of the plurality of container categories comprises:

carrying out a first determination of whether the laboratory container (101) depicted in the first image belongs to one container category of a plurality of container categories or the laboratory container (101) depicted in the first image does not belong to any container category of the plurality of container categories, wherein the first determination comprises using the coordinates of the point representing the first image and the respective category points representing the container categories; carrying out a second determination of whether the laboratory container (101) depicted in the first image belongs to one container category of a plurality of container categories or the laboratory container (101) depicted in the first image does not belong to any container category of the plurality of container categories, wherein the second determination comprises using the output of the output layer of the neural network; and if the first determination differs from the second determination, establishing that the laboratory container (101) depicted in the first image does not belong to any container category of the plurality of container categories.

9. The method of claim 8 in combination with claim 7, wherein the second determination comprises: determining, by using the output of the first machine learning model, whether, for each category of the plurality of container categories, the respective probability is below a probability threshold and if, for each category of the plurality of container categories, the respective probability is below the probability threshold, establishing that the laboratory container (101) depicted in the first image does not belong to any container category of the plurality of container categories.

10. The method of any one of the preceding claims,

wherein, if it is determined that the laboratory container (101) depicted in the first image does not belong to any container category of the plurality of container categories, the method further comprises: obtaining a second image depicting at least a portion of the laboratory container (101), wherein the second image differs from the first image; and determining, using a second machine learning model and the second image, whether the laboratory container (101) depicted in the first image belongs to one container category of a plurality of container categories or the laboratory container (101) depicted in the first image does not belong to any container category of the plurality of container categories; wherein the first image may be a side view of the laboratory container (101) and/or the second image may be a top view of the laboratory container (101).

11. The method of any one of the preceding claims,

wherein category points are points in the feature space, wherein each point of the one or more category points represents a respective container category of the plurality of container categories.

12. A computer program comprising instructions that, when the program is executed by a computer, cause the computer to carry out the method of any one of the preceding claims.

13. A computer-readable medium storing the computer program of claim 12.

14. A data processing system comprising means for carrying out the method according to any one of claims 1 to 11.

FIG 1

EP 4 557 231 A1

FIG 2

Obtain a first image depicting container portion 〜 301

Determine whether the container in the first image belongs to one container category or does not belong to any container category 〜 303

FIG 3

```
┌─────────────────────────────────────────────────────────────────┐
│ Obtain a respective category point for each container category    │─~ 305
└─────────────────────────────────────────────────────────────────┘
                              │
                              ▼
┌─────────────────────────────────────────────────────────────────┐
│ Obtain the first distance and the second distance                 │─~ 310
└─────────────────────────────────────────────────────────────────┘
                              │
                              ▼
┌─────────────────────────────────────────────────────────────────┐
│ determining whether at least one condition of the set of          │
│ conditions of the first rejection algorithm is fulfilled or not   │─~ 320
└─────────────────────────────────────────────────────────────────┘
                              │
                              ▼
```

330

┌──────────────────────────┐           ╱╲
│ Establish that container  │   yes    ╱  Are all the conditions of ╲
│ in first image does not   │◄─────── ╱  first rejection algorithm  ╲
│ belong to any container   │         ╲        fulfilled?          ╱
│ category                  │          ╲                          ╱
└──────────────────────────┘           ╲╱
                                         │ no
                                         ▼
┌─────────────────────────────────────────────────────────────────┐
│ Establish that container category of container in first image is  │
│ represented by a point closest to a point representing the first  │─~ 340
│ image                                                             │
└─────────────────────────────────────────────────────────────────┘

FIG 4

FIG 5

Europäisches
Patentamt

European
Patent Office

Office européen
des brevets

# EUROPEAN SEARCH REPORT

Application Number

EP 23 21 0635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/383618 A1 (NALAM VENKAT RAYAL RAJ PRASAD [US] ET AL) 1 December 2022 (2022-12-01) * abstract * * paragraphs [0006], [0043] – [0048], [0082] – [0074] * ----- | 1-15 | INV. G06V10/25 G06V10/44 G06V10/74 G06V10/764 G06V10/82 G06V20/52 |
| X | EP 3 652 679 B1 (SIEMENS HEALTHCARE DIAGNOSTICS INC [US]) 13 April 2022 (2022-04-13) * paragraphs [0005], [0023] – [0034], [0042], [0045] * ----- | 1-15 | |
| X | MAIDMENT TRISTAN D ET AL: "Machine learning classifier of medical specimen images", SPIE PROCEEDINGS; [PROCEEDINGS OF SPIE ISSN 0277-786X], SPIE, US, vol. 11513, 22 May 2020 (2020-05-22), pages 115130R-115130R, XP060131773, DOI: 10.1117/12.2564492 ISBN: 978-1-5106-3673-6 * Section 2, Section 3, Section 4 * ----- | 1-15 | TECHNICAL FIELDS SEARCHED (IPC) G06V |

The present search report has been drawn up for all claims

| Place of search | Date of completion of the search | Examiner |
|---|---|---|
| The Hague | 25 April 2024 | Androulidakis, Iosif |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 0635

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2024

| Patent document cited in search report | | Publication date | Patent family member(s) | | Publication date |
|---|---|---|---|---|---|
| US 2022383618 | A1 | 01-12-2022 | CN | 114585443 A | 03-06-2022 |
| | | | EP | 4051434 A1 | 07-09-2022 |
| | | | JP | 7438345 B2 | 26-02-2024 |
| | | | JP | 2023501941 A | 20-01-2023 |
| | | | US | 2022383618 A1 | 01-12-2022 |
| | | | WO | 2021086725 A1 | 06-05-2021 |
| EP 3652679 | B1 | 13-04-2022 | CN | 110832508 A | 21-02-2020 |
| | | | EP | 3652679 A1 | 20-05-2020 |
| | | | JP | 6937884 B2 | 22-09-2021 |
| | | | JP | 2020526841 A | 31-08-2020 |
| | | | US | 2020167591 A1 | 28-05-2020 |
| | | | WO | 2019013960 A1 | 17-01-2019 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAN et al.** *EfficientNetV2: Smaller Models and Faster Training*, 2021